# FASCICULE DE BREVET EUROPEEN

(11) **EP 2 318 315 B1**
(45) Date de publication et mention de la délivrance du brevet: **16.11.2011**
(21) Numéro de dépôt: 09757691.2
(22) Date de dépôt: 28.05.2009
(51) Int. Cl.: C01G 45/00, C01G 53/00, H01M 10/36, H01M 4/50, H01M 4/52

(54) **MATÉRIAU D'ÉLECTRODE POSITIVE FORMÉ D'UN OXYDE DE TYPE LAMELLAIRE POUR ACCUMULATEUR AU LITHIUM.**
MATERIAL FÜR POSITIVE ELEKTRODE AUS EINEM OXID VOM LAMELLAREN TYP FÜR EINE LITHIUMBATTERIE
POSITIVE ELECTRODE MATERIAL FORMED FROM A LAMELLAR-TYPE OXIDE FOR A LITHIUM BATTERY

(30) Priorité: 05.06.2008 FR 0803139
(43) Date de publication de la demande: 11.05.2011
(73) Titulaire: Commissariat à l'Énergie Atomique et aux Énergies Alternatives, 75015 Paris (FR)
(72) Inventeur: PATOUX, Sébastien, F-38600 Fontaine (FR); BOURBON, Carole, F-38590 Saint-Michel de Saint-Geoirs (FR)
(74) Mandataire: Dubreu, Sandrine
(86) Numéro de dépôt international: PCT/FR2009/000625
(87) Numéro de publication internationale: WO 2009/147315

(56) Documents cités:
- EP-A- 1 837 937
- WO-A-2004/107480
- WO-A-2008/086041
- US-A1- 2005 136 329
- THACKERAY M M ET AL: "Comments on the structural complexity of lithium-rich Li1+xM1-xO2 electrodes (M=Mn, Ni, Co) for lithium batteries" ELECTROCHEMISTRY COMMUNICATION, ELSEVIER, AMSTERDAM, NL, vol. 8, no. 9, 1 septembre 2006 (2006-09-01), pages 1531-1538, XP025182299 ISSN: 1388-2481 [extrait le 2006-09-01]
- MICHAEL M THACKERAY ET AL: "Advances in manganese-oxide 'composite' electrodes for lithium-ion" JOURNAL OF MATERIALS CHEMISTRY, THE ROYAL SOCIETY OF CHEMISTRY, CAMBRIDGE, GB, vol. 15, 10 mars 2005 (2005-03-10), pages 2257-2267, XP007903619 ISSN: 0959-9428
- JOHNSON C S ET AL: "Lithium-manganese oxide electrodes with layered-spinel composite structures xLi2MnO3.(1-x)Li1+yMn2-yO4 (0<x<1, 0=<y=<0.33) for lithium batteries" ELECTROCHEMISTRY COMMUNICATION, ELSEVIER, AMSTERDAM, NL, vol. 7, no. 5, 1 mai 2005 (2005-05-01), pages 528-536, XP004844734 ISSN: 1388-2481

## Description

### Domaine technique de l'invention

L'invention concerne un oxyde de type lamellaire, en particulier utilisé comme matériau actif d'une électrode positive pour un accumulateur au lithium ainsi qu'un procédé de synthèse d'un tel oxyde.

### État de la technique

Les accumulateurs au lithium remplacent progressivement les accumulateurs nickel-cadmium (Ni-Cd) ou nickel-hydrure métallique (Ni-MH) comme source d'énergie autonome, en particulier dans les équipements portables. Cette tendance s'explique par l'amélioration continue des performances des accumulateurs au lithium, leur conférant des densités d'énergie massique et volumique nettement supérieures à celles des accumulateurs Ni-Cd et Ni-MH. Ainsi, alors que les premiers accumulateurs au lithium de type Li-ion possédaient une densité d'énergie massique d'environ 85 Wh/kg, il est actuellement possible d'obtenir une densité d'énergie massique d'environ 200 Wh/kg. À titre de comparaison, les accumulateurs Ni-MH et les accumulateurs Ni-Cd ont respectivement une densité d'énergie massique de 100 Wh/kg et de 50 Wh/kg.

Cependant, afin de répondre efficacement aux nouvelles applications de plus en plus gourmandes en énergie, les accumulateurs au lithium doivent encore être améliorés. Or, l'amélioration des performances des accumulateurs Li-Ion et en particulier l'augmentation de leur capacité sont intimement liées à la recherche de nouveaux matériaux actifs d'électrode.

Actuellement, les matériaux actifs des électrodes négatives généralement utilisées dans les accumulateurs au lithium commerciaux sont le carbone (graphite, coke,...), un oxyde spinelle de type Li₄Ti₅O₁₂ ou un métal formant un alliage avec le lithium tel que Sn ou Si.

En général, les matériaux actifs d'électrode positive utilisés dans les accumulateurs au lithium commercialisés sont des composés à structure de type lamellaire, comme les oxydes LiCoO₂ et LiNiO₂, ou bien des composés de structure spinelle, tels que LiMn₂O₄ et ses dérivés.

Or, il est bien connu que le matériau actif de l'électrode positive des accumulateurs Li-Ion est actuellement le facteur limitant pour obtenir une augmentation de la densité d'énergie massique.

Une voie d'amélioration consiste à augmenter le potentiel d'oxydo-réduction (potentiel redox) du matériau actif de l'électrode positive. Ainsi, depuis quelques années, des matériaux actifs d'électrode positive présentant une activité électrochimique à haute tension, au-delà de 4,2 V par rapport au potentiel redox du couple Li⁺/Li (également noté 4,2 V vs Li⁺/Li) sont développés afin d'augmenter la densité d'énergie des accumulateurs Li-Ion. Parmi ces nouveaux composés prometteurs, on peut citer :
- les composés de type LiCoPO₄ et LiNiPO₄ avec respectivement des potentiels redox de 4,8 V et de 5,1 V par rapport au potentiel redox du couple Li⁺/Li
- et les oxydes spinelles de type LiNi_{0,5}Mn_{1,5}O₄ avec un potentiel redox de 4,7 V vs. Li⁺/Li.
Cependant, afin de pouvoir utiliser de tels composés dans des accumulateurs commerciaux, ces composés doivent encore être améliorés et l'interface électrode/électrolyte doit être stabilisée à haute tension car la durée de vie est de l'ordre de quelques dizaines de cycles et est dont faible.

En outre, ces composés ont des capacités spécifiques théoriques peu élevées, généralement comprises entre 145 et 170 mAh/g.

Une autre voie d'amélioration possible consiste à trouver des matériaux actifs pour électrode positive d'accumulateurs au lithium ayant des capacités spécifiques plus élevées que les matériaux actifs actuellement utilisés.

Or, les oxydes de type lamellaire de type LiMO₂, où M représente un élément de transition, tel que le cobalt, permettent d'obtenir les capacités théoriques parmi les plus élevées. Les capacités théoriques sont, en effet, comprises entre 270 à 300 mAh/g environ, selon la masse molaire de l'élément de transition. Cependant, en pratique, la capacité obtenue est généralement de l'ordre de 150 mAh/g, dû à l'obligation de maintien de la cohérence structurelle de tels oxydes.

Ainsi, des composés alternatifs ont été proposés pour remplacer les oxydes de type lamellaire de type LiMO₂. Il a, par exemple, été proposé d'utiliser plusieurs métaux des transitions dans les oxydes de type lamellaire. Par exemple, les composés LiNi_{0,8}Co_{0,15}Al_{0,05}O₂ et LiNi_{1/3}Co_{1/3}Mn_{1/3}O₂, également de structure de type lamellaire, permettent d'atteindre des performances électrochimiques similaires ou sensiblement plus élevées que les oxydes de type LiMO₂, pour un coût inférieur ou égal et une stabilité chimique améliorée en particulier à l'état chargé.

Parmi les matériaux actifs proposés récemment dans la littérature, les oxydes de type xLi₂M'O₃●(1-x)LiMO₂, où :
- x est compris entre 0 et 1
- M est un élément tel que Mn, Ni ou Co
- M' est un élément tel que Mn, Ti ou Zr
sont présentés comme des matériaux permettant d'obtenir des capacités spécifiques élevées et donc des accumulateurs Li-Ion de grande densité d'énergie.

En particulier, l'article de Jeom-Soo Kim et al. (« Electrochemical and Structural Properties of xLi2M'O3•(1-x)LiMn0,5Ni0,5O2 Electrodes for Lithium Batteries (M'= Ti, Mn, Zr ; 0≤x≤0,3) », Chem Mater. 2004, 16, 1996-2006) étudie les propriétés structurelles et électrochimiques d'électrodes comprenant un matériau actif de type xLi₂M'O₃●(1-x)LiMn_{0,5}Ni_{0,5}O₂, avec M'= Ti, Mn, Zr et 0≤x≤0,3 par rapport à une électrode de référence en Lithium métallique. De tels oxydes ont la particularité de présenter des phénomènes électrochimiques multiples associés aux changements de degrés d'oxydation des différents éléments de transition. Cela permet, dans certains cas, d'obtenir des capacités spécifiques élevées, laissant augurer la mise au point de matériaux actifs particulièrement attractifs. Cependant, la tenue de la capacité spécifique avec de tels matériaux n'est pas assurée en cyclage. En effet, une baisse de la capacité spécifique peut être observée au cours des cycles de charge/décharge. Ainsi, des progrès importants doivent encore être apportés afin de proposer des matériaux actifs d'électrode positive permettant d'obtenir une capacité spécifique élevée et stabilisée et donc des accumulateurs Lithium-Ion plus performants.

La demande internationale WO-A-2004107480 propose d'utiliser des oxydes lamellaires de formule LiₓMn_{y}M_{1-y}O₂, où x≤0,20, Mn est dans un état d'oxydation +4 et M est au moins un métal de transition ou un autre cation métallique ayant un rayon ionique capable d'être inséré dans la structure sans la rompre indûment.

Dans la demande US2005/0136329, les performances électrochimiques des matériaux ayant la formule générale Li{Li_{(1-2x)/3}Mn_{(2-x)/3}Niₓ}O₂ est améliorée en dopant lesdits matériaux avec un cation divalent choisi parmi Ca, Cu, Mg et Zn.

### Objet de l'invention

L'invention a pour but de proposer des matériaux actifs pour électrode positive remédiant aux inconvénients des matériaux selon l'art antérieur et permettant, en particulier, dans le domaine des accumulateurs au lithium, d'obtenir une capacité spécifique élevée et stabilisée en cyclage, avantageusement à toutes les températures de cyclage usuellement utilisées et dans la gamme habituelle de potentiels.

Selon l'invention, ce but est atteint par les revendications annexées.

En particulier, ce but est atteint par une nouvelle famille d'oxydes de type lamellaire répondant à la formule générale suivante :

xLi₂MnO₃•(1-x)LiM¹ₐM²_{b}M³_{c}O₂

où:
- x est de l'ordre de 0,75,
- M¹ est un élément chimique choisi parmi un premier groupe constitué par Mn, Ni, Co, Fe, Ti, Cr, V et Cu,
- M³ est au moins un élément chimique choisi parmi un second groupe constitué par Mg, Zn, Al, Na, Ca, Li, K, Sc, B, C, Si, P et S,
- M² est un élément chimique choisi parmi le premier groupe et le second groupe et il est différent de M¹ et de M³,
- a + b+ c = 1, avec a, b et c non nuls.

Selon un développement de l'invention, l'oxyde de type lamellaire répond à la formule suivante :

0,75Li₂MnO₃•0,25LiNi_{0,9}Mn_{0,05}Mg_{0,05}O₂.

Selon un autre développement de l'invention, il répond à la formule suivante :

0,75Li₂MnO₃•0,25LiNi_{0,6}Mn_{0,2}Mg_{0,2}O₂.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

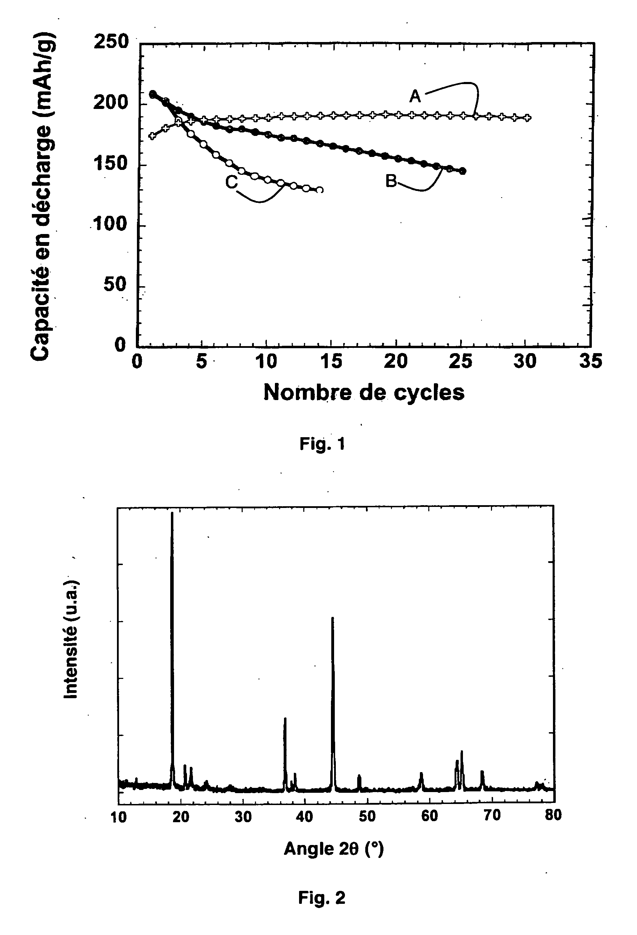

- la figure 1 représente l'évolution de la capacité spécifique en décharge en fonction du nombre de cycles, en mode intentiostatique (régime de C/10, 55°C), d'accumulateurs au Lithium comprenant du lithium comme matériau actif pour l'électrode négative et respectivement 0,75Li₂MnO₃•0,25LiNiO₂, 0,75Li₂MnO₃•0,25LiNi_{0,6}Mg_{0,2}Mn_{0,2}O₂ et 0,7Li2MnO3•0,3LiMn1/3Ni1/3Co1/3O2 comme matériau actif pour l'électrode positive.
- la figure 2 représente un diagramme de diffraction des rayons X (λ_{cuKα}) du composé de formule 0,75Li₂MnO₃•0,25LiNi_{0,9}Mn_{0,05}Mg_{0,05}O₂ préparé selon un premier mode particulier de réalisation.

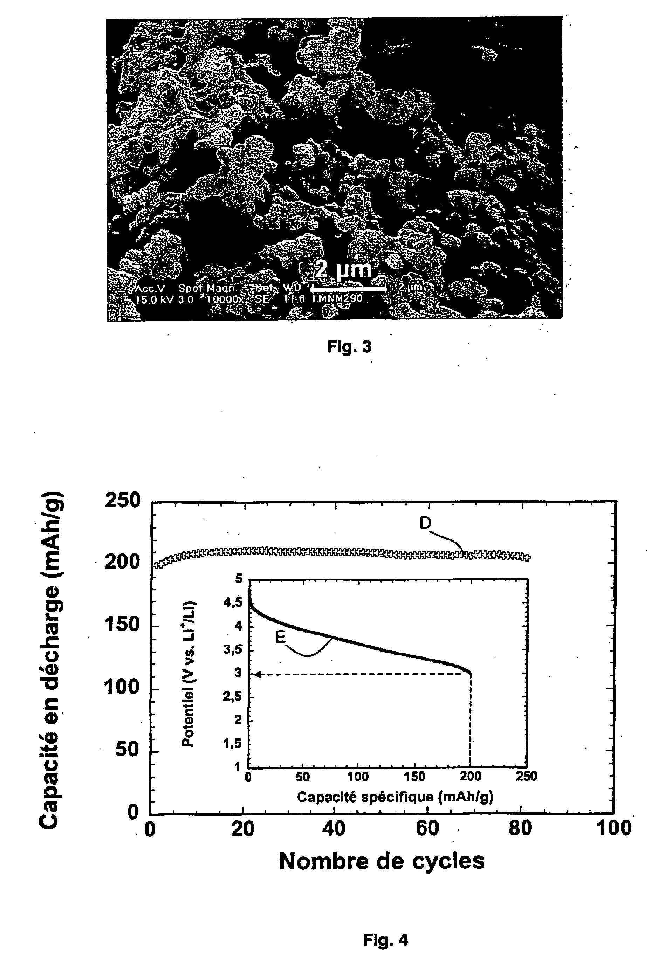

- la figure 3 correspond à une image de microscopie électronique à balayage du composé de formule 0,75Li₂MnO₃**•**0,25LiNi_{0,05}Mn_{0,05}Mg_{0,05}O₂ préparé selon un premier mode particulier de réalisation.
- la figure 4 représente l'évolution de la capacité spécifique en décharge en fonction du nombre de cycles d'un accumulateur au lithium comprenant le composé 0,75Li₂MnO₃•0,25LiNi_{0,9}Mn_{0,05}Mg_{0,05}O₂ comme matériau actif d'électrode positive, lors d'un test réalisé en mode intentiostatique à un régime de C/10 et une température de 55°C, entre 3 et 4,8 V vs. Li⁺/Li.

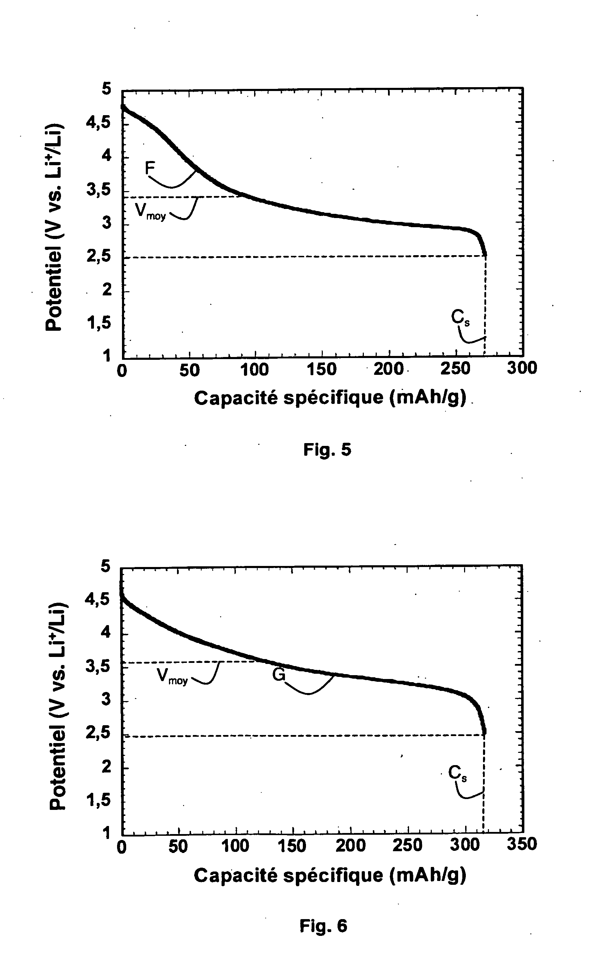

- la figure 5 représente la courbe de charge/décharge (potentiel en fonction de la capacité spécifique) au centième cycle d'un accumulateur au lithium comprenant le composé 0,75Li₂MnO₃•0,25LiNi_{0,9}Mn_{0,05}Mg_{0,05}O₂ comme matériau actif d'électrode positive, lors d'un test réalisé en mode intentiostatique, entre 2,5 et 4,8 V vs. Li⁺/Li, à un régime de C/10 et une température de 55°C.

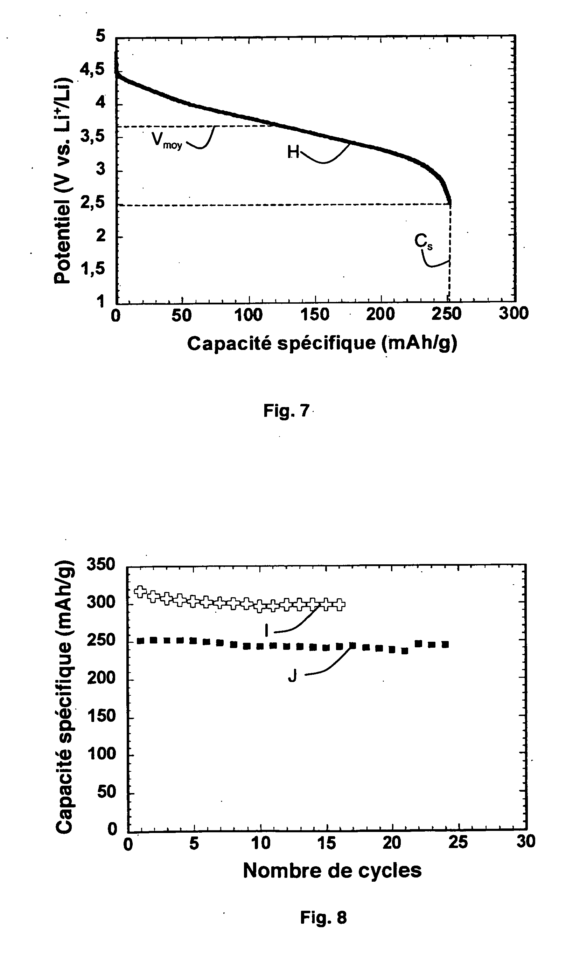

- les figures 6 et 7 représentent la courbe de première décharge (potentiel en fonction de la capacité spécifique) d'un accumulateur au lithium comprenant un composé 0,75Li₂MnO₃●0,25LiNi_{0,9}Mn_{0,05}Mg_{0,05}O₂ obtenu selon une variante de réalisation et utilisé comme matériau actif d'électrode positive, lors d'un test réalisé en mode intentiostatique, entre 2,5 et 4,8 V vs. Li⁺/Li, à un régime de C/10 et respectivement à une température de 55°C et de 20°C.
- la figure 8 représente l'évolution de la capacité spécifique en décharge en fonction du nombre de cycles (régime de C/10) des accumulateurs au lithium dont la première décharge est reportée sur les figures 6 et 7.

### Description de modes particuliers de réalisation

Les oxydes de type lamellaire répondant à la formule générale suivante :

xLi₂MnO₃•(1-x)LiM¹ₐM²_{b}M³_{c}O₂ (1) où :

- x est de l'ordre de 0,75,
- M¹ est un élément chimique choisi parmi un premier groupe constitué par Mn, Ni, Co, Fe, Ti, Cr, V et Cu,
- M³ est au moins un élément chimique choisi parmi un second groupe constitué par Mg, Zn, Al, Na, Ca, Li, K, Sc, B, C, Si, P et S,
- M² est un élément chimique choisi parmi le premier groupe et le second groupe et il est différent de M¹ et de M³,
- a + b+ c = 1, avec a, b et c non nuls,
sont avantageusement utilisés comme matériaux actifs d'électrode positive pour un accumulateur au lithium.

En particulier, il a été trouvé que de tels oxydes sont capables de délivrer une capacité spécifique élevée sur un grand nombre de cycle de charge/décharge, tout en en permettant de stabiliser la capacité spécifique en cyclage.

Comparés aux oxydes xLi₂M'O₃•(1-x)LiMO₂ et en particulier les oxydes xLi₂M'O₃•(1-x)LiMn_{0,5}Ni_{0,5}O₂ rapportés dans l'article précité de Jeom-Soo Kim et al. (« Electrochemical and Structural Properties of xLi2M'O3•(1-x)LiMn0,5Ni0,5O2 Electrodes for Lithium Batteries (M'= Ti, Mn, Zr; 0≤x≤0,3) », Chem Mater. 2004, 16, 1996-2006), les oxydes répondant à la formule générale (1) comporte au moins un élément chimique inactif électrochimiquement (M³), également appelé élément chimique dépourvu d'activité électrochimique.

Par élément chimique inactif électrochimiquement, on entend un élément chimique ne s'oxydant pas ou ne se réduisant pas au cours de la charge ou de la décharge d'un accumulateur au lithium, dans la gamme habituelle de potentiels. M³ est, plus particulièrement, au moins un élément chimique choisi parmi le groupe constitué par Mg, Zn, Al, Na, Ca, Li, K, Sc, B, C, Si, P et S. Ainsi, M³ peut aussi être formé par plusieurs des éléments chimiques du groupe mentionné ci-dessus. M³ permet, ainsi, de stabiliser indirectement la capacité spécifique en cyclage.

M³ est, par ailleurs, associé :
- à un élément chimique M¹ actif électrochimiquement et choisi parmi Mn, Ni, Co, Fe, Ti, Cr, V et Cu.
- et à un élément chimique M². L'élément M² peut être soit actif électrochimiquement. Dans ce cas, il est choisi parmi Mn, Ni, Co, Fe, Ti, Cr, V et Cu. Il peut aussi être inactif électrochimiquement et donc choisi parmi Mg, Zn, Al, Na, Ca, Li, K, Sc, B, C, Si, P et S. Par ailleurs, M² est choisi de manière à être différent de M¹ et de M².

Avantageusement, dans la formule générale (1), M¹ est du nickel, M² est du manganèse et M³ est du magnésium. De plus, b est, préférentiellement, égal à c.

Ainsi, l'électrode positive d'un accumulateur au lithium peut comporter, en quantité majoritaire, un oxyde répondant à la formule générale (1) comme matériau actif. L'électrode positive comporte, avantageusement, en quantités minoritaires, un liant organique tel qu'un polyéther, un polyester, un polymère à base de méthacrylate de méthyle, de l'acrylonitrile, du fluorure de vinylidène et un additif conducteur électronique tel que du carbone.

L'accumulateur au lithium comporte également une électrode négative dont le matériau actif peut être de tout type connu. À titre d'exemple, le matériau actif de l'électrode négative peut être du lithium sous forme métallique ou bien il peut être un matériau apte à insérer et désinsérer les ions Li⁺, tel que du carbone en général sous forme graphite, un oxyde tel que Li₄Ti₅O₁₂ ou un composé formant un alliage avec le lithium tel que le silicium ou l'étain.

Enfin, l'électrolyte de l'accumulateur au lithium comporte en général un sel de lithium, par exemple, choisi parmi LiClO₄, LiAsF₆, LiPF₆, LiBF₄, LiR_{F}SO₃, LiCH₃SO₃, LiN(R_{F}SO₂)₂, LiC(R_{F}SO₂)₃, du trifluorométhanesulphonylimide de lithium (également noté LiT_{F}SI), du bis(oxalato)borate de lithium (également noté LiBOB), du bis(perfluoroethylsulfonyl)imide de lithium (également noté LiBETI), du fluoroalkylphosphate de lithium (LiFAP). R_{F} est un radical choisi parmi un atome de fluor et un groupement perfluoroalkyle comportant entre un et huit atomes de carbone. De plus, le sel de lithium est, de préférence, dissous dans un solvant polaire aprotique. Le sel est, par exemple, supporté par un élément séparateur disposé entre les deux électrodes de l'accumulateur, l'élément séparateur étant alors imbibé d'électrolyte. Dans le cas d'un accumulateur au lithium comprenant un électrolyte polymère, le sel de lithium n'est pas dissous dans un solvant organique, mais dans un composite polymère solide tel que le polyoxyde d'éthylène (POE), le polyacrylonitrile (PAN), le polyméthacrylate de méthyle (PMMA), le polyfluorure de vinylidène (PVdF), le polychlorure de vinyle (PVC) ou un de leurs dérivés.

Par ailleurs, pour atteindre des capacités spécifiques élevées, les bornes de cyclage en tension de l'accumulateur doivent être de 2 à 3V vs. Li⁺/Li environ pour la limite basse et de 4,6 à 4,8 V vs. Li⁺/Li environ pour la limite haute. La tension moyenne de fonctionnement est généralement de l'ordre de 3,4 à 3,8 V vs. Li⁺/Li en décharge.

Selon un premier exemple de réalisation (noté ci-après Exemple n°1), le composé 0,75Li₂MnO₃•0,25LiNi_{0,6}Mn_{0,2}Mg_{0,2}O₂ a été synthétisé puis testé dans un accumulateur au lithium de format « pile bouton ».

Le composé 0,75Li₂MnO₃•0,25LiNi_{0,6}Mn_{0,2}Mg_{0,2}O₂ est, en particulier, obtenu en mélangeant intimement 2g d'un précurseur A préalablement synthétisé et 1,502g d'hydroxyde de lithium LiOH•H₂O, en chauffant le mélange à 900°C pendant 24 heures, puis en le refroidissant très rapidement à température ambiante (trempe). En particulier, le précurseur A a été préalablement synthétisé à partir :
- d'une solution aqueuse de 0,1L contenant 12,095g de sulfate de manganèse (MnSO₄), 3,389g de sulfate de nickel (NiSO₄•3,95H₂O) et 1,232g de sulfate de magnésium (MgSO₄•7H₂O)
- et d'une solution aqueuse de 0,1L contenant 16,450g d'hydroxyde de lithium LiOH•H₂O.
Ces deux solutions sont ajoutées simultanément à une troisième solution aqueuse de 0,25L contenant 10,070g d'hydroxyde de lithium LiOH•H₂O et maintenue sous agitation mécanique afin de former un précipité. Ce précipité est ensuite filtré, lavé plusieurs fois à l'eau distillée et séché pendant 24 heures à 100°C, afin d'obtenir le précurseur A. Le précurseur A répond à la formule générale Mn_{0,8}Ni_{0,15}Mg_{0,05}(OH)₂.

Une caractérisation du produit obtenu après l'opération de trempe confirme la synthèse du composé 0,75Li₂MnO₃•0,25LiNi_{0,6}Mn_{0,2}Mg_{0,2}O₂ ainsi que sa structure de type lamellaire.

Un accumulateur au lithium de format "pile bouton" est alors réalisé avec:
- une électrode négative en lithium, de 16 mm de diamètre et de 135 µm d'épaisseur, déposée sur un disque de nickel servant de collecteur de courant,
- une électrode positive constituée d'un disque de 14 mm de diamètre prélevée sur un film composite de 25 µm d'épaisseur comprenant le matériau 0,75Li₂MnO₃•0,25LiNi_{0,6}Mg_{0,2}Mg_{0,2}O₂ préalablement synthétisé (80% en masse), du noir de carbone (10% en masse) et de l'hexafluorure de polyvinylidène (10 % en masse), le tout étant déposé sur un collecteur de courant formé par une feuille en aluminium de 20 micromètres d'épaisseur,
- un séparateur imbibé d'un l'électrolyte liquide à base du sel LiPF₆ (1 mol/L) en solution dans un mélange de carbonate d'éthylène, de carbonate de propylène et de carbonate de diméthyle (rapport 1/1/3 en masse).

L'évolution de la capacité spécifique en fonction du nombre de cycles correspondant à cet accumulateur au lithium est représentée par la courbe A sur la figure 1. À titre de comparaison, la figure 1 comporte également des courbes B et C, correspondant à l'évolution de la capacité spécifique en fonction du nombre de cycles pour deux accumulateurs similaires mais mettant en oeuvre respectivement 0,7Li₂MnO₃•0,3LiMn_{1/3}Ni_{1/3}Co_{1/3}O₂ et 0,75Li₂MnO₃•0,25LiNiO₂ comme matériau actif d'électrode positive. La courbe A permet de constater que la capacité spécifique obtenue avec l'oxyde 0,75Li₂MnO₃•0,25LiNi_{0,6}Mn_{0,2}Mg_{0,2}O₂ est relativement constante quel que soit le nombre de cycles. Au contraire, avec le composé selon l'art antérieur 0,75Li₂MnO₃•0,25LiNiO₂ et un composé 0,7Li₂MnO₃•0,3LiMn_{1/3}Ni_{1/3}Co_{1/3}O₂ s'apparentant à ceux de l'art antérieur, la capacité spécifique diminue rapidement (courbes C et B).

Selon un second exemple de réalisation (noté ci-après Exemple n° 2), le composé 0,75Li₂MnO₃•0,25LiNi_{0,9}Mn_{0,05}Mg_{0,05}O₂ a été synthétisé puis testé dans un accumulateur au lithium de format « pile bouton » similaire à celui réalisé dans l'exemple n°1.

Le composé 0,75Li₂MnO₃•0,25LiNi_{0,9}Mn_{0,05}Mg_{0,05}O₂ est, en particulier, synthétisé en mélangeant intimement 1,50g d'un précurseur A' préalablement synthétisé et 1,11g d'hydroxyde de lithium LiOH•H₂O, puis en chauffant le mélange à 1000°C pendant 24 heures, avant de le refroidir très rapidement à température ambiante (trempe). En particulier, le précurseur A' a été préalablement synthétisé à partir :
- d'une solution aqueuse de 0,1L contenant 11,528g de sulfate de manganèse (MnSO₄), 5,083g de sulfate de nickel (NiSO₄•3,95H₂O) et 0,308g de sulfate de magnésium (MgSO₄•7H₂O),
- et d'une solution aqueuse de 0,1L contenant 16,450g d'hydroxyde de lithium LiOH•H₂O.

Ces deux solutions aqueuses sont ajoutées simultanément à une troisième solution aqueuse de 0,25L contenant 10,070g d'hydroxyde de lithium LiOH•H₂O et maintenue sous agitation mécanique. Un précipité se forme, avant d'être filtré, lavé plusieurs fois à l'eau distillée puis séché pendant 60 heures à 100°C afin d'obtenir le précurseur A'. Le précurseur A' répond à la formule générale Mn_{0,7625}Ni_{0,225}Mg_{0,0125}(OH)₂.

Le composé 0,75Li₂MnO₃•0,25LiNi_{0,9}Mn_{0,05}Mg_{0,05}O₂ ainsi synthétisé a été caractérisé par diffraction par rayons X (figure 2) et par observation par microscopie électronique à balayage (figure 3). La figure 2 permet de confirmer la composition du composé synthétisé et la figure 3 confirme la structure de type lamellaire du composé.

De plus, un tel composé a été utilisé comme matériau actif d'une électrode positive dans un accumulateur au lithium de format "pile bouton" similaire à l'accumulateur réalisé dans l'exemple n°1. Seul le matériau actif de l'électrode positive a été remplacé dans l'accumulateur au lithium selon l'exemple n° 1.

Les figures 4 et 5 illustrent les caractéristiques électrochimiques correspondant à cet accumulateur au lithium. Ainsi, on peut constater sur la figure 4 que la capacité spécifique de l'accumulateur au lithium est stable en cyclage. En effet, la valeur de la capacité spécifique (courbe D) est sensiblement constante quel que soit le nombre de cycles appliqué. En effet, la perte moyenne de capacité par cycle est estimée, sur les 80 premiers cycles, à seulement 0,01%. À titre de comparaison, cette perte est généralement de l'ordre de 0,04% pour un accumulateur au Lithium commercial.

De plus, la figure 4 comporte en insert la courbe de première décharge (Courbe E) de l'accumulateur, réalisée en mode intentiostatique, à un régime de C/10 et à une température de 55°C, pour des potentiels variant entre 3 et 4,8V vs Li⁺/Li. La courbe E correspond, ainsi, à l'évolution du potentiel par rapport au potentiel du couple Li⁺/Li, en fonction de la capacité spécifique. Ainsi, pour un potentiel de 3V vs Li⁺/Li, la capacité spécifique de l'accumulateur est, en première décharge, de 200 mAh/g.

La courbe F de la figure 5 indique qu'il est, de plus, possible d'obtenir, dans le cas du composé 0,75Li₂MnO₃•0,25LiNi_{0,9}Mn_{0,05}Mg_{0,05}O₂ et après 100 cycles de charge/décharge :
- une capacité déchargée de 271,7 mAh/g,
- un potentiel moyen en décharge de 3,406 V vs. Li⁺/Li
- et une énergie massique du matériau de 925 Wh/kg.

L'énergie massique est très élevée en comparaison à celle obtenue avec des matériaux actifs utilisés dans les accumulateurs actuellement commercialisé (généralement de l'ordre de 600 Wh/kg), d'autant plus qu'elle est obtenue après un grand nombre de cycles.

Ainsi, comme illustré par les figures 1 à 5, les oxydes 0,75Li₂MnO₃•0,25LiNi_{0,6}Mn_{0,2}Mg_{0,2}O₂ et 0,75Li₂MnO₃•0,25LiNi_{0,9}Mn_{0,05}Mg_{0,05}O₂, et plus généralement la famille d'oxydes de type xLi₂MnO₃•(1-x)LiM¹ₐM²_{b}M³_{c}O₂, permettent d'atteindre des capacités élevées, tout en maintenant une bonne stabilité sur un grand nombre de cycles de charge/décharge. Dans certains cas, il est possible d'obtenir des valeurs de capacité spécifique dépassant 300mAh/g, ce qui représente une augmentation de 100% par rapport aux matériaux actifs pour électrode positive utilisés dans les accumulateurs au lithium, tels que l'oxyde LiCoO₂.

Comme illustré par les exemples n°1 et 2, les oxydes selon l'invention sont, avantageusement, préparés en traitant thermiquement une poudre obtenue par mélange, dans des proportions prédéterminées, d'un précurseur formant une source des éléments M¹, M² et M³ avec de l'hydroxyde de lithium LiOH•H₂O, à une température au moins égale à 800°C et le plus souvent de l'ordre de 900°C à 1000°C. Le précurseur répond, en particulier, à la formule générale MnₓM¹ₐ₍₁₋ₓ₎M²_{b(1-x)}M³_{c(1-x)}(OH)₂. Une fois le traitement thermique réalisé, la poudre est refroidie très rapidement, en réalisant par exemple une trempe.

Par ailleurs, une fois synthétisé, l'oxyde peut être soumis à un post-traitement en solution aqueuse légèrement acide, afin d'améliorer ses propriétés électrochimiques et donc la capacité spécifique de l'accumulateur au lithium.

Ainsi, selon un troisième exemple de réalisation (noté ci-après Exemple n°3), 10g du composé 0,75Li₂MnO₃•0,25LiNi_{0,9}Mn_{0,05}Mg_{0,05}O₂ obtenu selon l'exemple n°2 sont mélangés à 250 mL d'une solution aqueuse ayant un pH égal à 5,5. La solution aqueuse est, par exemple, de l'eau dans laquelle est ajouté un acide tel que H₂SO₄ ou HNO₃ afin d'ajuster le pH. Le mélange est ensuite agité pendant 30 minutes, puis il est placé dans une cuve à ultrasons pendant 10 minutes. Le mélange est finalement remis sous agitation magnétique pendant 24 heures. Une opération de centrifugation consistant en trois lavages à l'eau distillée permet de récupérer une poudre, qui est, ensuite, séchée à 50°C pendant 24 heures. Finalement, la poudre est soumise à un traitement thermique, à une température de 350°C, pendant 3 heures et sous air.

Le composé ainsi traité est, ensuite, testé comme matériau actif pour électrode positive dans un accumulateur de format "pile bouton", respectivement avec des températures de cyclage à 20°C et à 55°C. L'accumulateur est similaire aux accumulateurs réalisés selon les exemples n°1 et 2. Ainsi, il comporte les mêmes constituants que les accumulateurs réalisés selon les exemples n°1 et 2, à l'exception du matériau actif de l'électrode positive.

Les caractéristiques électrochimiques correspondant à l'exemple n°3 sont rapportées sur les figures 6 à 8.

Comme illustré sur les figures 6 à 8, pour un régime de C/10, en mode intentiostatique, la capacité spécifique est de 317 mAh/g pour une température de cyclage de 55°C (courbe G) et elle est de 252 mAh/g pour une température de cyclage de 20°C (Courbe H). Or, en général, la capacité spécifique obtenue pour une température de cyclage de 20°C, avec des matériaux actifs pour électrode positive selon l'art antérieur est plus faible. Par exemple, elle est de l'ordre de 150mAh/g, à 20°C, pour des composés de type xLi₂MnO₃•(1-x)LiMO₂. Par ailleurs, le potentiel moyen en décharge est de 3,656 V vs. Li⁺/Li à 20°C (soit une densité d'énergie de 921Wh/kg de matériau) et de 3,563 V vs. Li⁺/Li à 55°C (soit une densité d'énergie de 1129Wh/kg de matériau). De plus, comme représenté par les courbes I (température de cyclage = 55°C) et J (température de cyclage = 20°C) de la figure 8, la capacité spécifique en décharge est stable quel que soit le nombre de cycles, autant pour une température de cyclage de 55°C que de 20°C.

## Revendications

1. Oxyde de type lamellaire **caractérisé en ce qu'**il répond à la formule générale suivante :
xLi₂MnO₃•(1-x)LiM¹ₐM²_{b}M³_{c}O₂
où :
- x est de l'ordre de 0,75,
- M¹ est un élément chimique choisi parmi un premier groupe constitué par Mn, Ni, Co, Fe, Ti, Cr, V et Cu,
- M³ est au moins un élément chimique choisi parmi un second groupe constitué par Mg, Zn, Al, Na, Ca, Li, K, Sc, B, C, Si, P et S,
- M² est un élément chimique choisi parmi le premier groupe et le second groupe et il est différent de M¹ et de M³,
- a + b+ c = 1, avec a, b et c non nuls.

2. Oxyde selon la revendication 1, **caractérisé en ce que** :
- M¹ = Ni,
- M² = Mn
- et M³ = Mg.

3. Oxyde selon l'une des revendications 1 et 2, **caractérisé en ce que** b = c.

4. Oxyde selon l'une quelconque des revendications 1 à 3, **caractérisé en ce qu'**il répond à la formule suivante :
0,75Li₂MnO•₃0,25LiNi_{0,9}Mn_{0,05}Mg_{0,05}O₂.

5. Oxyde selon l'une quelconque des revendications 1 à 3, **caractérisé en ce qu'**il répond à la formule suivante :
0,75Li₂MnO₃•0,25LiNi_{0,6}Mn_{0,2}Mg_{0,2}O₂.

6. Procédé de synthèse d'un oxyde de type lamellaire selon l'une quelconque des revendications 1 à 5, **caractérisé en ce qu'**il comporte un traitement thermique, à une température supérieure ou égale à 800°C, d'une poudre obtenue par mélange d'un précurseur répondant à la formule générale MnₓM¹ₐ₍₁₋ₓ₎M²_{b(1-x)}M³_{c(1-x)}(OH)₂ avec de l'hydroxyde de lithium suivi d'un refroidissement très rapide de ladite poudre.

7. Procédé selon la revendication 6, **caractérisé en ce qu'**après le refroidissement très rapide, la poudre subit un post-traitement en solution aqueuse légèrement acide.

8. Electrode positive **caractérisée en ce qu'**elle comporte un matériau actif constitué par un oxyde de type lamellaire selon l'une quelconque des revendications 1 à 5.

9. Accumulateur au lithium **caractérisé en ce qu'**il comporte une électrode positive selon la revendication 8.

## Claims

1. A lamellar-type oxide **characterized in that** it is represented by the general formula xLi₂MnO₃•(1-x)LiM¹ₐM²_{b}M³_{c}O₂, with:
- x is about 0.75,
- M¹ is a chemical element selected from a first group consisting of Mn, Ni, Co, Fe, Ti, Cr, V and Cu,
- M³ is at least a chemical element selected from a second group consisting of Mg, Zn, Al, Na, Ca, Li, K, Sc, B, C, Si, P and S,
- M² is a chemical element selected from the first group and the second group and it is different from M¹ and from M³, and
- a + b+ c = 1, with a, b and c not zero.

2. The oxide according to claim 1, **characterized in that**
- M¹ = Ni,
- M² Mn, and
- M³ = Mg.

3. The oxide according to one of the claims 1 or 2, **characterized in that** b=c.

4. The oxide according to any one of the claims 1 to 3, **characterized in that** it is represented by the formula 0.75Li₂MnO₃•0.25LiNi_{0.9}Mn_{0.05}Mg_{0.05}O₂.

5. The oxide according to any one of the claims 1 to 3, **characterized in that** it is represented by the formula 0.75Li₂MnO₃•0.25LiNi_{0.6}Mn_{0.2}Mg_{0.2}O₂.

6. A method for synthesizing a lamellar-type oxide according to any one of the claims 1 to 5, **characterized in that** it comprises a thermal treatment at a temperature greater than or equal to 800°C of a powder obtained by mixing a precursor represented by the general formula MnₓM¹ₐ₍₁₋ₓ₎M²_{b(1-x)}M³_{c(1-x)}(OH)₂ with lithium hydroxide, followed by very rapid cooling of said powder.

7. The method according to claim 6, **characterized in that** after the very rapid cooling, the powder undergoes post-treatment in a slightly acid aqueous solution.

8. A positive electrode **characterized in that** it comprises an active material constituted by a lamellar-type oxide according to any one of claims 1 to 5.

9. Lithium battery **characterized in that** it comprises a positive electrode according to claim 8.

## Patentansprüche

1. Oxid vom lamellaren Typ, **dadurch gekennzeichnet, dass** es folgender allgemeiner Formel entspricht:
xLi₂MnO₃•(1-x)LiM¹ₐM²_{b}M³cO₂
worin:
- x in der Größenordnung von 0,75 liegt,
- M¹ ein chemisches Element ist, welches aus einer ersten Gruppe bestehend aus Mn, Ni, Co, Fe, Ti, Cr, V und Cu ausgewählt ist,
- M³ wenigstens ein chemisches Element ist, das aus einer zweiten Gruppe bestehend aus Mg, Zn, Al, Na, Ca, Li, K, Sc, B, C, Si, P und S ausgewählt ist,
- M² ein chemisches Element ist, das aus der ersten Gruppe und der zweiten Gruppe ausgewählt ist, und ein anderes als M¹ und als M³ ist,
- a + b + c = 1, mit a, b und c ungleich null.

2. Oxid nach Anspruch 1, **dadurch gekennzeichnet, dass**:
- M¹ = Ni,
- M² = Mn und
- M³ = Mg.

3. Oxid nach einem der Ansprüche 1 und 2, **dadurch gekennzeichnet, dass** b = c.

4. Oxid nach einem der Ansprüche 1 bis 3, **dadurch gekennzeichnet, dass** es folgender Formel entspricht:
0,75Li₂MnO₃•0,25LiNi_{0,9}Mn_{0,05}Mg_{0,05}O₂.

5. Oxid nach einem der Ansprüche 1 bis 3, **dadurch gekennzeichnet, dass** es folgender Formel entspricht:
0,75Li₂MnO₃•0,25LiNi_{0,6}Mn_{0,2}Mg_{0,2}O₂.

6. Verfahren zur Synthese eines Oxids vom lamellaren Typ nach einem der Ansprüche 1 bis 5, **dadurch gekennzeichnet, dass** es eine Wärmebehandlung - bei einer Temperatur von über oder gleich 800 °C - eines Pulvers, das durch Mischen eines Vorläufers der allgemeinen Formel MnₓM¹ₐ₍₁₋ₓ₎M²_{b(1-x)}M³_{c(1-x)}(OH)₂ mit Lithiumhydroxid erhalten wird, umfasst, an die sich ein sehr schnelles Abkühlen des Pulvers anschließt.

7. Verfahren nach Anspruch 6, **dadurch gekennzeichnet, dass** das Pulver nach dem sehr schnellen Abkühlen einer Nachbehandlung in leicht saurer wässriger Lösung unterzogen wird.

8. Positive Elektrode, **dadurch gekennzeichnet, dass** sie ein aktives Material umfasst, das von einem Oxid vom lamellaren Typ nach einem der Ansprüche 1 bis 5 gebildet ist.

9. Lithium-Akkumulator, **dadurch gekennzeichnet, dass** er eine positive Elektrode nach Anspruch 8 umfasst.
